# EUROPÄISCHE PATENTSCHRIFT

(11) **EP 3 027 474 B1**
(45) Veröffentlichungstag und Bekanntmachung des Hinweises auf die Patenterteilung: **10.05.2017**
(21) Anmeldenummer: 14744459.0
(22) Anmeldetag: 19.07.2014
(51) Int. Cl.: B60R 21/38, E05B 77/08, E05B 83/24

(54) **VERSTELLEINRICHTUNG FÜR EIN SCHLOSS EINER FRONTKLAPPE EINES KRAFTFAHRZEUGS UND ZUGEHÖRIGES KRAFTFAHRZEUG**
ADJUSTING DEVICE FOR A LOCK OF A FRONT FLAP OF A MOTOR VEHICLE, AND ASSOCIATED MOTOR VEHICLE
DISPOSITIF DE RÉGLAGE D'UNE SERRURE DU CAPOT AVANT D'UN VÉHICULE AUTOMOBILE ET VÉHICULE AUTOMOBILE ASSOCIÉ

(30) Priorität: 01.08.2013 DE 102013012832
(43) Veröffentlichungstag der Anmeldung: 08.06.2016
(73) Patentinhaber: Audi AG, 85045 Ingolstadt (DE)
(72) Erfinder: KUGLER, Peter, 49186 Bad Iburg (DE); DORFNER, Wolfgang, 85114 Buxheim (DE); STERNECKER, Harald, 92339 Beilngries (DE); PFALLER, Bernhard-Konrad, 85095 Denkendorf (DE); SCHINDLER, Manfred, 85570 Markt Schwaben (DE)
(86) Internationale Anmeldenummer: PCT/EP2014/001974
(87) Internationale Veröffentlichungsnummer: WO 2015/014456

(56) Entgegenhaltungen:
- EP-A1- 1 705 382
- JP-A- 2008 260 446
- JP-A- 2009 173 088

## Beschreibung

Die Erfindung betrifft eine Verstelleinrichtung für ein Schloss einer Frontklappe eines Kraftfahrzeugs, die aus einer Normalstellung in eine erhöhte Stellung bewegbar ist.

Um die Gefahr einer Verletzung von Fußgängern bei einer Kollision mit einem Kraftfahrzeug zu verringern sind Frontklappen entwickelt worden, die nach der Detektion eines Aufpralls aktiv angehoben werden können, damit ein Teil der Aufprallenergie durch Deformation der Frontklappe aufgenommen werden kann. Derartige aktive Klappen werden zumeist vertikal nach oben und zusätzlich nach hinten verschoben. Durch das Anheben der Frontklappe wird zwischen der Klappe und dem Motorraum ein Verformungsraum gebildet. Die erhöhte Stellung der Frontklappe wird auch als Fußgängerschutzstellung bezeichnet, gegebenenfalls kann auch eine sogenannte Typschadenstellung vorgesehen sein, bei der die Frontklappe ebenfalls in eine erhöhte und nach hinten versetzte Stellung gebracht werden kann.

Die DE 10 2010 029 719 A1 offenbart ein Scharnier für eine Frontklappe eines Kraftfahrzeugs, die durch einen Aktor aus einer Schließlage in eine erhöhte Fußgängerschutzlage verstellbar ist.

Aus der DE 10 2007 056 691 A1 ist eine Fußgängerschutzvorrichtung für ein Kraftfahrzeug bekannt, bei der das Schloss karosserieseitig auf einer Führung bewegbar gelagert ist und bei einer Verstellung aus der Normalstellung in die erhöhte Stellung eine kombinierte Bewegung ausführt, die aus einer Verschiebung entlang der Führung und einer Schwenkbewegung besteht. Auf diese Weise wird das an der Karosserie angebrachte Schloss bei einer Bewegung der Frontklappe entsprechend mitbewegt. Im Bereich des Schlosses ist kein Aktor vorgesehen, die Relativbewegung des Schlosses wird allein durch die Kinematik der Lagerung der Frontklappe erziehlt. Die WO2004037617 offenbart eine Verstelleinrichtung gemäß dem Oberbegriff des Anspruchs 1. Der Erfindung liegt die Aufgabe zugrunde, eine Verstellvorrichtung anzugeben, die ein einfaches Verschieben des Schlosses ermöglicht, wenn die Frontklappe aus einer Normalstellung in eine erhöhte Stellung bewegt wird.

Zur Lösung dieser Aufgabe ist eine Verstelleinrichtung mit den Merkmalen des Anspruchs 1 vorgesehen. Die erfindungsgemäße Verstelleinrichtung ermöglicht eine Verriegelung des entlang einer Führung verschiebbaren Schlittens. Dieser verriegelte Zustand liegt dann vor, wenn sich die Frontklappe des Kraftfahrzeugs in der Normalstellung befindet. In diesem Zustand ist die Frontklappe geschlossen und an ihrem vorderen Ende durch das Schloss mit der Karosserie gekoppelt. Wenn die Frontklappe bei einer bevorstehenden oder erkannten Kollision mit einem anderen Verkehrsteilnehmer, z. B. einem Fußgänger, von der Normalstellung in die erhöhte Stellung bewegt worden ist, ist der Schlitten ebenfalls mit der Führung verklemmt, d. h. das Schloss befindet sich in einer verriegelten Stellung, in der eine ungewünschte Verschiebung verhindert wird. Bei einer Bewegung der Frontklappe von der Normalstellung in die erhöhte Stellung, die Fußgängerschutzstellung oder die Typschadenstellung, wird somit der mit dem Schloss gekoppelte Schlitten entlang der Führung im Wesentlichen vertikal verschoben, so dass das Schloss gemäß der Bewegung der Frontklappe nachgeführt wird.

In der Klemmstellung befindet sich der Keil zwischen der Innenseite der Führung und der Außenseite des Schlittens. Die Form des Keils bewirkt, dass Selbsthemmung auftritt, d. h. in der Klemmstellung ist keine Relativbewegung zwischen der Führung und dem Schlitten möglich, so dass der Schlitten und das damit gekoppelte Schloss in der gewünschten Position festgehalten werden. Auch eine Erhöhung der Kraft würde wegen der Selbsthemmung nicht zu einer Relativbewegung führen.

Bei der erfindungsgemäßen Verstelleinrichtung kann es vorgesehen sein, dass der wenigstens eine Keil durch einen von dem Aktor verschiebbaren Schieber aus der Klemmstellung verschiebbar ist. Durch die Verschiebung des Schiebers wird die Klemmung gelöst, so dass der Schlitten und das daran befestigte Schloss entlang der Führung verschiebbar sind. Dadurch ergibt sich der Vorteil, dass für den Antrieb des Aktors lediglich eine vergleichsweise geringe Kraft erforderlich ist, um den Schieber zu verschieben, wodurch auch der wenigstens eine Keil gelöst wird, wodurch die Selbsthemmung aufgehoben wird. Im Gegensatz dazu würde ein Aktor, der den Schlitten und das damit gekoppelte Schloss löst, eine wesentlich größere Kraft erfordern, die wiederum einen leistungsfähigeren Aktor erfordert. Erfindungsgemäß kann hingegen ein Aktor mit vergleichsweise kleiner Leistung eingesetzt werden, da dieser lediglich die Aufgabe hat, einen Schieber eine vergleichsweise geringe Strecke zu verschieben.

Eine besonders zuverlässige Funktion der erfindungsgemäßen Verstelleinrichtung ergibt sich, wenn diese einen ersten Keil aufweist, der in der Klemmstellung eine Bewegung entlang einer ersten Richtung blockiert, sowie einen zweiten Keil, der in der Klemmstellung eine Bewegung entlang einer zweiten, entgegengesetzten Richtung blockiert. Durch die beiden Keile können Bewegungen in beide Richtungen entlang der Führung gesperrt oder freigegeben werden.

Die erfindungsgemäße Verstelleinrichtung kann so ausgebildet sein, dass der wenigstens eine Schieber durch eine Feder beaufschlagt ist, durch deren Federkraft der Schieber bzw. der durch den Schieber verschobene Keil in die Klemmstellung bringbar ist. Dementsprechend befindet sich der Keil immer dann in Klemmstellung, wenn der Aktor nicht wirkt. In diesem Zustand, bei ausgeschaltetem Aktor, hält die Federkraft den Schieber und den Keil in der Klemmstellung. Erst durch Einschalten des Aktors wird der Schieber entgegen der Federkraft bewegt, wodurch die Keile aus der Klemmstellung gelöst werden.

Bei der erfindungsgemäßen Verstelleinrichtung wird es bevorzugt, dass sie zwei an gegenüberliegenden Seiten der Führung angeordnete Keile aufweist. Auf diese Weise wird ein Verkanten des Schiebers oder des Schlittens ausgeschlossen, da dieser an zwei gegenüberliegenden Seiten in Kontakt mit den Keilen steht.

Um den Bauraumbedarf zu verringern, kann es vorgesehen sein, dass der Schieber der erfindungsgemäßen Verstelleinrichtung eine sich in Querrichtung erstreckende Ausnehmung aufweist, in die ein sich radial nach innen erstreckender Vorsprung des oder eines Keils eingreift. Der Vorsprung des Keils ist mit einer gewissen Toleranz in der Ausnehmung des Schiebers gehaltert, so dass kleine Winkel- oder Lagetoleranzen ausgeglichen werden können. Andererseits werden die Keile auf diese Weise zuverlässig von dem Schieber geführt, so dass die gewünschte Klemmwirkung zuverlässig erzeugt werden kann.

In weiterer Ausgestaltung der Erfindung kann es vorgesehen sein, dass der Schlitten eine Ausnehmung für den Aktor oder ein mit dem Aktor gekoppeltes Steuerelement aufweist. Bei dieser Ausgestaltung kann der Aktor im Zentrum des Schlittens angeordnet sein und durch eine Bewegung in eine Richtung den bzw. die Keile oder den Schieber betätigen, um die Selbsthemmung zu lösen. Durch eine Richtungsänderung des Aktors kann der gegenüberliegende Schieber betätigt werden, um eine Bewegung in der entgegengesetzten Richtung zu ermöglichen.

Bei der erfindungsgemäßen Verstelleinrichtung kann der Aktor einen elektrischen oder pneumatischen oder hydraulischen Antrieb aufweisen.

Es liegt auch im Rahmen der Erfindung, dass der Schlitten wenigstens eine sich in Längsrichtung der Führung erstreckende, von dem Schieber durchsetzte Ausnehmung aufweist. Wenn der Schieber die Ausnehmung des Schlittens durchsetzt, kann die Verstelleinrichtung besonders klein gebaut werden.

Daneben betrifft die Erfindung ein Kraftfahrzeug, mit einer Frontklappe, die aus einer Normalstellung in eine erhöhte Stellung bewegbar ist und deren Schloss mittels einer Verstelleinrichtung verstellbar ist.

Das erfindungsgemäße Kraftfahrzeug zeichnet sich dadurch aus, dass es eine Verstelleinrichtung der beschriebenen Art aufweist.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: eine erfindungsgemäße Verstelleinrichtung in einer ersten Stellung;
- Fig. 2: die Verstelleinrichtung von Fig. 1 in einer zweiten Stellung; und
- Fig. 3: die Verstelleinrichtung von Fig. 1 in einer dritten Stellung.

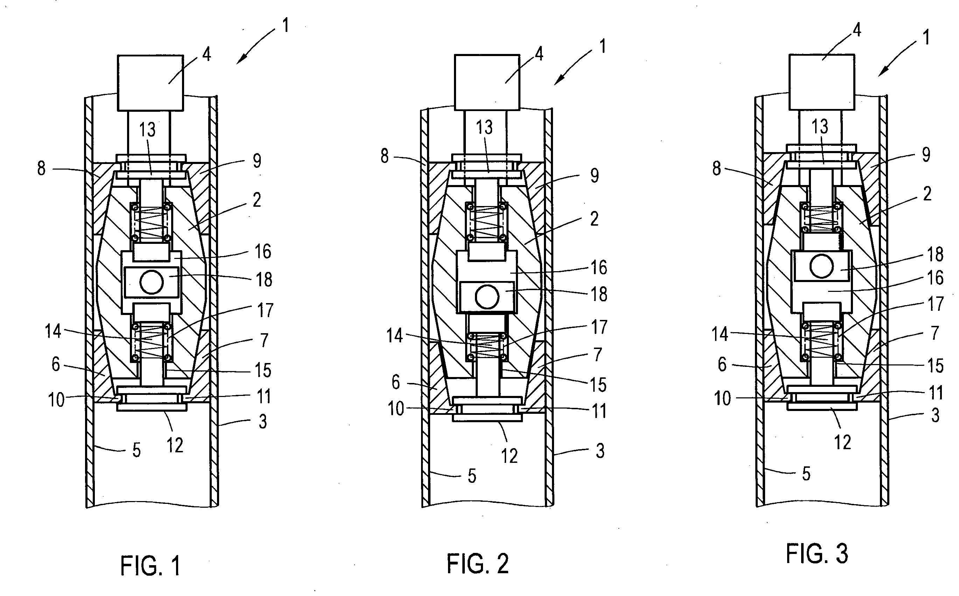

Die in Fig. 1 in einer geschnittenen Ansicht gezeigte Verstelleinrichtung 1 umfasst einen Schlitten 2, der entlang einer Führung 3 bewegbar ist. Der Schlitten 2 ist mit einem in Fig. 1 lediglich schematisch dargestellten Schloss 4 gekoppelt, das bei einer Verschiebung des Schlittens 2 vertikal entlang der Führung 3 bewegbar ist.

Das Schloss 4 ist zur Verriegelung einer Frontklappe eines Kraftfahrzeugs vorgesehen, die aus einer Normalstellung in eine erhöhte Stellung bewegbar ist, wenn ein Aufprall eines anderen Verkehrsteilnehmers, insbesondere eines Fußgängers, bevorsteht oder detektiert worden ist. Die Frontklappe wird dann an ihrem hinteren Ende angehoben und gleichzeitig zum Fahrzeugheck hin bewegt. Die Verstelleinrichtung 1 ermöglicht in dieser Situation eine Anpassung der Position des Schlosses 4 an die verschobene Frontklappe.

In Fig. 1 erkennt man, dass zwischen dem Schlitten 2 und einer Innenseite 5 der Führung 3 vier Keile 6, 7, 8, 9 angeordnet sind. Die Keile 6, 7, 8, 9 sind so angeordnet, dass eine Keilfläche an der Innenseite 5 der Führung 3 anliegt, eine weitere Keilfläche liegt an der Außenseite des Schlittens 2 an. Der Schlitten 2 weist somit vier an die Größe und den Keilwinkel der Keile 6 - 9 angepasste Außenflächen auf.

Die Keile 6, 7 sind an gegenüberliegenden Innenseiten 5 der Führung 3 angeordnet, ebenso wie die Keile 8, 9.

In der in Fig. 1 gezeigten Stellung ist der Schlitten 2 und damit das Schloss 4 in der Führung 3 verklemmt. Die Keile 6 - 9 weisen jeweils einen sich nach innen erstreckenden Vorsprung 10 auf, der in eine Ausnehmung 11 eines Schiebers 12 eingreift. In dem dargestellten Ausführungsbeispiel weist der Schieber 12 zwei einander gegenüberliegende Ausnehmungen 11 auf. Es sind jedoch auch andere Ausführungen denkbar, bei denen lediglich eine einzige Ausnehmung oder mehr als zwei Ausnehmungen vorhanden sind. Der Schlitten 2 ist symmetrisch aufgebaut und weist an seiner gegenüberliegenden Seite einen weiteren Schieber 13 auf, in dessen Ausnehmung Vorsprünge der Keile 8, 9 gehalten sind. Die Schieber 12, 13 weisen einen sich in Längsrichtung erstreckenden Abschnitt 14 auf, der eine Ausnehmung 15 des Schlittens 2 durchsetzt und in einer zentralen Ausnehmung 16 des Schlittens 2 mündet. Der sich in Längsrichtung erstreckende Abschnitt 14 des Schiebers 12 wird von einer lediglich schematisch dargestellten Feder 17 beaufschlagt, die als Druckfeder ausgebildet ist und sich einerseits an dem Schlitten 12 und andererseits an dem Schieber 12 abstützt.

In dem in Fig. 1 gezeigten Zustand wird der Schieber 12 unter dem Einfluss der in der Feder 17 gespeicherten Energie zum Schlitten 2 gedrückt, bis die Keile 6, 7 an den entsprechenden Außenflächen des Schlittens 2 anliegen, so dass Selbsthemmung auftritt.

Der an der gegenüberliegenden Seite angeordnete Schieber 13 weist ebenfalls eine entsprechende Feder auf, so dass der Schieber 13 in entgegengesetzter Richtung, zum Schlitten 2 bewegt wird, bis die Keile 8, 9 eine weitere Verschiebung des Schiebers 13 verhindern. In dieser Position tritt Selbsthemmung auf, wodurch der Schlitten 2 und das damit gekoppelte Schloss 4 fixiert sind.

In der zentralen Ausnehmung 16 erkennt man ein Steuerelement 18, das mit einem Aktor gekoppelt ist. In dem dargestellten Ausführungsbeispiel ist der Aktor als Elektromotor ausgebildet, ein weiteres Übertragungselement (nicht gezeigt), z. B. eine Zahnstange oder eine Gewindespindel, übersetzt die Drehbewegung des Elektromotors in eine Linearbewegung, so dass das Steuerelement in Längsrichtung der Führung 3 bewegbar ist.

Fig. 2 zeigt den Zustand, nachdem das Steuerelement 18 aus seiner in Fig. 1 gezeigten neutralen Position nach unten, d. h. zum Schieber 12 hin bewegt worden ist. Wenn das Steuerelement 18 den Schieber 12 berührt, wird dieser entlang der Führung 3 verschoben und nimmt dabei die mit ihm gekoppelten Keile 6, 7 mit, so dass diese vom Schlitten 2 wegbewegt werden. Das Steuerelement 18 überwindet dabei zunächst die von der Feder 17 aufgebrachte Kraft und verschiebt den Schieber 12 anschließend vom Schlitten 2 weg. In diesem Zustand ist die Klemmung gelöst, so dass der Schlitten 2 nach unten bewegt werden kann. In diesem Zustand eilen die in Fig. 2 oberen Keile 8, 9 nach, so dass die Klemmung auch an dieser Seite des Schlittens gelöst wird. In dem nicht geklemmten Zustand kann der Schlitten 2 beliebig weit entlang der Führung 3 verschoben werden, da die Keile 6, 7 gelöst sind und voreilen, während die Keile 8, 9 gelöst sind und nacheilen. Durch eine Bewegung des Schlittens 2 kann das damit gekoppelte Schloss 4 praktisch beliebig entlang der Führung verschoben werden.

Um eine Bewegung in die entgegengesetzte Richtung durchzuführen, wird das Steuerelement 18 in die entgegengesetzte Richtung bewegt. Der mit dem Steuerelement 18 gekoppelte Aktor wird dazu umgepolt, so dass das Steuerelement 18 - wie in Fig. 3 gezeigt ist - in die entgegengesetzte Richtung, in Fig. 3 nach oben, bewegt wird. In diesem Zustand überwindet das Steuerelement 18 die durch die Feder des Schiebers 13 erzeugte Federkraft (Druckkraft), die den Schieber 13 und die Keile 8, 9 nach unten gegen den Schlitten 2 drückt. Wenn das Steuerelement 18 an dem Schieber 13 anliegt werden die Keile 8, 9 aus der Klemmstellung, in der sie einerseits an der Innenseite 5 der Führung 3 und andererseits an den Außenseiten des Schlittens 2 anliegen, in eine gelöste Position bewegt. In diesem Zustand ist die Verriegelung aufgehoben und die Klemmung des Schlittens gelöst, der Schlitten 2 kann dann beliebig nach oben verschoben werden. Die am anderen Ende des Schlittens 2 angeordneten Keile 6, 7 eilen nach und lösen die Klemmung selbsttätig.

Der Aktor für die Betätigung des Steuerelements 18 benötigt lediglich eine geringe Leistung, da er jeweils nur einen Schieber 12, 13 betätigt, dazu ist lediglich eine geringe Kraft erforderlich. Andererseits wird durch die Keile 6 - 9 eine große Klemmkraft erzeugt, die den Schlitten 2 in jeder gewünschten Position festhält. Dementsprechend kann durch die in den Fig. 1 - 3 gezeigte Verstelleinrichtung 1 sowohl die aufzuwendende Kraft verringert als auch ein Aktor mit geringerer Leistung eingesetzt werden.

## Patentansprüche

1. Verstelleinrichtung (1) für ein Schloss (4) einer Frontklappe eines Kraftfahrzeugs, die aus einer Normalstellung in eine erhöhte Stellung bewegbar ist, wobei die Verstelleinrichtung (1) einen entlang einer Führung (3) verschiebbaren, mit dem Schloss (4) koppelbaren Schlitten (2) aufweist, **dadurch gekennzeichnet, dass** der Schlitten (2) in einer Klemmstellung durch wenigstens einen Keil (6, 7, 8, 9) mit der Führung (3) verklemmt ist und der durch einen Aktor zum Verschieben des wenigstens einen Keils (6, 7, 8, 9) in eine nicht geklemmte Stellung bringbar ist, in der der Schlitten (2) verschiebbar ist.

2. Verstelleinrichtung nach Anspruch 1,
**dadurch gekennzeichnet,**
**dass** der wenigstens eine Keil (6, 7, 8, 9) durch einen von dem Aktor verschiebbaren Schieber (12, 13) aus der Klemmstellung verschiebbar ist.

3. Verstelleinrichtung nach Anspruch 1 oder 2,
**dadurch gekennzeichnet,**
**dass** sie einen ersten Keil (6, 7) aufweist, der in der Klemmstellung eine Bewegung entlang einer ersten Richtung blockiert und einen zweiten Keil (8, 9), der in der Klemmstellung eine Bewegung entlang einer zweiten, entgegengesetzten Richtung blockiert.

4. Verstelleinrichtung nach Anspruch 2 oder 3,
**dadurch gekennzeichnet,**
**dass** der wenigstens eine Schieber (12, 13) von einer Feder beaufschlagt ist, durch deren Federkraft der Schieber (12, 13) und der Keil (6, 7, 8, 9) in die Klemmstellung bringbar sind.

5. Verstelleinrichtung nach einem der vorangehenden Ansprüche,
**dadurch gekennzeichnet,**
**dass** sie zwei an gegenüberliegenden Seiten der Führung (3) angeordnete Keile (6, 7, 8, 9) aufweist.

6. Verstelleinrichtung nach einem der Ansprüche 2 bis 5,
**dadurch gekennzeichnet,**
**dass** der Schieber (12, 13) eine sich in Querrichtung erstreckende Ausnehmung (11) aufweist, in die ein sich radial nach innen erstreckender Vorsprung (10) des oder eines Keils (6, 7, 8, 9) eingreift.

7. Verstelleinrichtung nach einem der vorangehenden Ansprüche,
**dadurch gekennzeichnet,**
**dass** der Schlitten (2) eine Ausnehmung (16) für den Aktor oder ein mit dem Aktor gekoppeltes Steuerelement (18) aufweist.

8. Verstelleinrichtung nach einem der vorangehenden Ansprüche,
**dadurch gekennzeichnet,**
**dass** der Aktor einen elektrischen oder pneumatischen oder hydraulischen Antrieb aufweist.

9. Verstelleinrichtung nach einem der Ansprüche 2 bis 8,
**dadurch gekennzeichnet,**
**dass** der Schlitten (2) wenigstens eine sich in Längsrichtung erstreckende, von dem Schieber (12, 13) durchsetzte Ausnehmung (15) aufweist.

10. Kraftfahrzeug, mit einer Frontklappe, die aus einer Normalstellung in eine erhöhte Stellung bewegbar ist und deren Schloss mittels einer Verstelleinrichtung verstellbar ist,
**dadurch gekennzeichnet,**
**dass** es eine Verstelleinrichtung nach einem der Ansprüche 1 bis 9 aufweist.

## Claims

1. Adjusting device (1) for a lock (4) of an engine bonnet of a motor vehicle which is movable from a normal position into an elevated position,
wherein
the adjusting device (1) has a carriage (2) which can be slid along a guide (3) and connected to the lock (4), **characterised in that** the carriage (2)
is clamped with the guide (3) in a clamping position by at least one wedge (6, 7, 8, 9) and can be brought by an actuator for sliding the at least one wedge (6, 7, 8, 9) into a non-clamping position in which the carriage (2) can be slid.

2. Adjusting device according to claim 1,
**characterised in that**
the at least one wedge (6, 7, 8, 9) can be slid out of the clamping position by a slider (12, 13) which can be slid by the actuator.

3. Adjusting device according to claim 1 or 2,
**characterised in that**
it has a first wedge (6, 7) which, in the clamping position, blocks a movement along a first direction, and it has a second wedge (8, 9) which, in the clamping position, blocks a movement along a second, opposite direction.

4. Adjusting device according to claim 2 or 3,
**characterised in that**
the at least one slider (12, 13) is loaded by a spring by whose spring force the slider (12, 13) and the wedge (6, 7, 8, 9) can be brought into the clamping position.

5. Adjusting device according to any one of the preceding claims,
**characterised in that**
it has two wedges (6, 7, 8, 9) arranged on opposite sides of the guide (3).

6. Adjusting device according to any one of claims 2 to 5,
**characterised in that**
the slider (12, 13) has a recess (11) extending in the transverse direction into which a projection (10) of the or a wedge (6, 7, 8, 9) extending radially inwards engages.

7. Adjusting device according to any one of the preceding claims,
**characterised in that**
the carriage (2) has a recess (16) for the actuator or a control element (18) connected to the actuator.

8. Adjusting device according to any one of the preceding claims,
**characterised in that**
the actuator has an electric or pneumatic or hydraulic drive.

9. Adjusting device according to any one of claims 2 to 8,
**characterised in that**
the carriage (2) has at least one recess (15) extending in the longitudinal direction which is penetrated by the slider (12, 13).

10. Motor vehicle having an engine bonnet which is movable from a normal position into an elevated position and whose lock can by adjusted by means of an adjusting device,
**characterised in that**
it has an adjusting device according to any one of claims 1 to 9.

## Revendications

1. Dispositif de déplacement (1) pour un verrou (4) d'un capot avant d'un véhicule automobile, lequel capot peut être déplacé d'une position normale à une position surélevée,
dans lequel
le dispositif de déplacement (1) comporte un coulisseau (2) pouvant être déplacé le long d'un guide (3) et pouvant être couplé au verrou (4),
**caractérisé en ce que** le coulisseau (2) est coincé dans une position de serrage par au moins une clavette (6, 7, 8, 9) avec le guide (3) et peut être amené par un actionneur destiné au déplacement de l'au moins une clavette (6, 7, 8, 9) dans une position non serrée dans laquelle le coulisseau (2) peut être déplacé.

2. Dispositif de déplacement selon la revendication 1,
**caractérisé en ce que**
l'au moins une clavette (6, 7, 8, 9) peut être déplacée hors de la position de serrage par une barre coulissante (12, 13) déplaçable par l'actionneur.

3. Dispositif de déplacement selon la revendication 1 ou 2,
**caractérisé en ce qu'**il comporte une première clavette (6, 7) qui bloque dans la position de serrage un mouvement le long d'une première direction et une deuxième clavette (8, 9) qui bloque dans la position de serrage un mouvement le long d'une deuxième direction opposée.

4. Dispositif de déplacement selon la revendication 2 ou 3
**caractérisé en ce que**
l'au moins une barre coulissante (12, 13) est soumise à l'action d'un ressort dont la force peut amener la barre coulissante (12,13) et la clavette (6, 7, 8, 9) dans la position de serrage.

5. Dispositif de déplacement selon l'une des revendications précédentes,
**caractérisé en ce qu'**il comporte deux clavettes (6, 7, 8, 9) agencées sur des côtés opposés du guide (3).

6. Dispositif de déplacement selon l'une des revendications 2 à 5,
**caractérisé en ce que**
la barre coulissante (12, 13) comporte un évidement (11) qui s'étend dans la direction transversale et dans lequel pénètre une partie en saillie (10), s'étendant de façon radiale vers l'intérieur, de la ou d'une clavette (6, 7, 8, 9).

7. Dispositif de déplacement selon l'une des revendications précédentes,
**caractérisé en ce que**
le coulisseau (2) comporte un évidement (16) pour l'actionneur ou pour un élément de commande (18) couplé à l'actionneur.

8. Dispositif de déplacement selon l'une des revendications précédentes,
**caractérisé en ce que**
l'actionneur comporte un dispositif d'entraînement électrique ou pneumatique ou hydraulique.

9. Dispositif de déplacement selon l'une des revendications 2 à 8,
**caractérisé en ce que**
le coulisseau (2) comporte au moins un évidement (15) qui s'étend dans la direction longitudinale et qui est traversé par la barre coulissante (12, 13).

10. Véhicule automobile, avec un capot avant qui est déplaçable d'une position normale à une position surélevée et dont le verrou peut être déplacé au moyen d'un dispositif de déplacement,
**caractérisé en ce qu'**il comporte un dispositif de déplacement selon l'une des revendications 1 à 9.
